# EUROPÄISCHE PATENTSCHRIFT

(11) **EP 4 091 925 B1**
(45) Veröffentlichungstag und Bekanntmachung des Hinweises auf die Patenterteilung: **17.07.2024**
(21) Anmeldenummer: 22173486.6
(22) Anmeldetag: 16.05.2022
(51) Int. Cl.: B62J 11/19, B62K 19/32

(54) **VORRICHTUNG ZUR FÜHRUNG MINDESTENS EINER FLEXIBLEN LEITUNG BEI EINEM LENKERFAHRZEUG**
DEVICE FOR GUIDING AT LEAST ONE FLEXIBLE LINE IN A STEERING VEHICLE
DISPOSITIF D'ACHEMINEMENT D'AU MOINS UN TUYAU FLEXIBLE DANS UN VÉHICULE À VOLANT

(30) Priorität: 18.05.2021 DE 102021112908
(43) Veröffentlichungstag der Anmeldung: 23.11.2022
(73) Patentinhaber: Erich Kuchler GmbH, 82131 Gauting (DE)
(72) Erfinder: Kuchler, Matthias, 82229 Seefeld-Hechendorf (DE); Kuchler, Thomas, 82131 Stockdorf (DE)
(74) Vertreter: Rösler Rasch van der Heide & Partner

(56) Entgegenhaltungen:
- US-A1- 2010 194 073
- US-B1- 9 174 695
- US-B2- 9 409 618

## Beschreibung

Die Erfindung betrifft eine Vorrichtung zur Führung mindestens einer flexiblen Leitung im Ringraum zwischen einem Steuerrohr eines Fahrzeugrahmens und einem im Steuerrohr drehbar gelagerten Gabelschaft einer Lenkergabel. Die Erfindung betrifft ferner die Verwendung einer solchen Vorrichtung zur Führung von Leitungen sowie Zwei-, Drei- und Vierräder, die mit einer solchen Vorrichtung ausgestattet sind.

Bei Fahrzeugen mit Lenkstangen, insbesondere Fahrrädern, Motorrädern, Scootern, ist die Lenkstange über einen Gabelschaft mit einer Lenkergabel verbunden, die direkt oder über eine Federung mit einem Vorderrad des Fahrzeuges verbunden ist. Der Gabelschaft ist dazu drehbar in einem Steuerrohr gelagert, das Teil eines Fahrzeugrahmens ist.

Bisher werden flexible Leitungen, die aus dem Bereich der Gabel und des Lenkers zum Rahmen geführt werden, meist auf der Außenseite dieser Bestandteile geführt, weil aufgrund der Relativbewegung zwischen Steuerrohr/Fahrzeugrahmen einerseits und Gabelschaft/Gabel/Lenker andererseits (Drehungen um bis zu +/- 180° und mehr) eine Führung im Inneren problematisch ist. Dies betrifft stromführende Leitungen (insb. für Beleuchtung), Hydraulikleitungen für Brems- oder Federungseinrichtungen oder Bowdenzüge aber zunehmend auch Signalleitungen zur Steuerung elektronischer Bauteile. Unter "flexible" Leitungen werden im Rahmen der Erfindung Leitungen für Strom, Signale, Licht, Hydrauliköl oder Stahlseile (Bowdenzüge) verstanden, die nicht starr ausgebildet sind, sich also elastisch verformen lassen. Die Leitungen können ein- oder mehradrig sein oder es können mehrere verschiedene oder sogar verschiedenartige Leitungen zusammengeführt sein.

Andererseits sind außen angebrachte Leitungen anfällig für Beschädigungen während des normalen Gebrauchs (insbesondere bei Kinderrädern und Mountainbikes), so dass ein zunehmendes Bedürfnis besteht, solche Leitungen gegenüber Auswirkungen von außen dadurch zu schützen, dass diese im Inneren der hohlen Strukturbauteile geführt werden. Aus Designgründen besteht zudem das Ziel weitergehender Integration von Bauteilen, dazu gehört auch, außen liegende Leitungen im Rahmen anzuordnen. Angesichts des Bedürfnisses, den Schwenkbereich des Lenkers dabei nicht zu beschränken, führt dies für die Leitungsführung zu Problemen. Zusätzlich ermöglicht die Kabelführung im inneren einen reduzierten Luftwiderstand, was besonders bei Zeitfahrrädern vorteilhaft ist.

Aus der DE 10 2013 20 45 56 ist eine Vorrichtung bekannt, bei der ein Kabel in einer Längsnut in einem Steuerrohr angeordnet ist.

Aus der DE 10 2015 21 44 91 A1 ist eine Kabelführung mit Schleifkontakten bekannt.

Aus der DE 10 2007 05 49 52 A1 ist eine Kabelführung mit einer Wickelfeder bekannt.

Aus der DE 20 2016 10 20 87 U1 ist eine Kabelführung mit trommelförmiger Wickelvorrichtung für das Kabel bekannt, bei der im Inneren des Steuerrohrs geführten Leitungen achsparallel zum Gabelschaft geführt sind.

Aus der DE 20 2018 101 912 U1 ist eine Leitungsführung für ein Zweirad bekannt, bei der eine Hülse oder Stulpe im Ringraum zwischen Steuerrohr und Gabelschaft angeordnet ist, welche eine reibende Berührung der Leitungen beim Lenkeinschlag mit dem innen liegenden Gabelschaft verhindern.

Die US 2019/0061864 A1 offenbart eine teleskopierbare Lenkeranordnung für Zweiräder, bei der spiralförmige Leitungen im Inneren des inneren Teleskopierschaftes geführt sind, um Längenänderungen zwischen den beiden Enden der bei relativ zueinander axial teleskopierbaren Schaftelementen auszugleichen, wobei eine reibende und damit abnützende Berührung zwischen der Spiralleitung und der umgebenden Schaftinnenwand nicht verhindert wird.

Aus der US 9 409 618 B2 ist eine Führungsvorrichtung für flexible Leitungen gemäß dem Oberbegriff von Anspruch 1 bekannt, bei der die Leitung in einem aus zwei Halbschalen gebildeten Führungskanal in einem Halbkreis in Umfangsrichtung geführt ist.

Aus der US 9 174 695 B1 ist eine eine Führungsvorrichtung für flexible Leitungen gemäß dem Oberbegriff von Anspruch 1 bekannt, die aus zwei in Axialrichtung beabstandeten Ringelementen mit radialen Durchtrittsöffnungen für die Leitung besteht, wobei die Leitung zwischen den beiden Ringelementen in Axialrichtung im Ringraum zwischen Stuerrohr und Gabelschaft geführt ist.US 2010/0194073 A1 offenbart eine Führung für Bowdenzüge eines Zweirades, die mehrere konzentrische Ringe aufweist, zwischen denen eine vertikale Kabelführung möglich ist.

Die Aufgabe der Erfindung ist es, eine baulich einfache Vorrichtung zur geschützten bzw. verdeckten Führung mindestens einer flexiblen Leitung im Bereich eines Gabelschaftes im Inneren eines Fahrzeugrahmens bereitzustellen. Die dabei auftretenden Bewegungen der Leitung sollen nicht zu einem Beschädigen der Leitung führen und es sollen Rückstellkräfte durch Verformung der Leitung weitgehend vermieden werden.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Die Aufgabe wird gemäß Anspruch 1 dadurch gelöst, dass die Vorrichtung mindestens ein Formelement zur Ausbildung mindestens einer teilweisen schraubenförmigen Führung von mindestens einer Windung für die mindestens eine Leitung im Ringraum ausbildet. In einer Ausbildung hat das Formelement die Gestalt einer helixförmigen Schraube. In einer anderen Ausbildung können eine Vielzahl einzelner Vorsprünge vorgesehen werden, deren Abfolge bzw. Anbringung die mindestens eine Leitung in einer spiral- oder helixförmigen Anordnung den Gabelschaft mit mindestens einer Umdrehung umwickelt.

Für die relative Drehbewegung verändert sich die Länge der Leitung nicht, d.h. es erfolgt keine Verlängerung oder ein Stauchen sondern lediglich der Durchmesser der Wendelspirale verändert sich. Mit anderen Worten wird durch das Aufweiten bzw. Zusammenziehen der Spiralwindungen der Leitung eine Drehbewegung der Gabel im Steuerrohr ausgeglichen bzw. überbrückt. Wenn ein maximaler Drehbereich des Lenkers in einer Richtung von 180° angenommen wird, so handelt es sich um eine halbe Drehung. Bei einem schraubenförmigen Führungskanal von einer Windung steht der doppelte Raum (360° gegenüber 180° bei maximaler Drehung des Lenkers) für ein Zusammenschieben oder Auseinanderziehen der Leitung zur Verfügung. Daher muss entweder die Leitung locker im Führungskanal gewickelt sein, um die Drehbewegung von +/- 180° aufzufangen oder diese wird in einer Endstellung, die einer Endstellung der Lenkerdrehbewegung (z.B. 180° gedreht von der Geradeaus-Stellung) entspricht, eng aufgewickelt. Bei Rückdrehung des Lenkers/Gabelschaftes in die entgegengesetzte Endstellung (z.B. -180°) erfolgt der Ausgleich durch eine entsprechende Vergrößerung des Durchmessers der Spiralleitung. Sinnvollerweise sollte die Leitung in in einer Mittelstellung zwischen Innen und Außendurchmesser geführt werden (neutrale Mittelstellung = Geradeaus-Stellung), damit die Drehbewegung +/- 180° durch Zusammenziehen und Aufweiten der Spirale aufgefangen werden kann. Dabei ist die Anordnung vorzugsweise so gewählt, dass sich die spiralförmige Leitung bei einer Lenkerstellung "geradeaus" in entspanntem Zustand befindet. Je nach Lenkereinschlag können durch das Aufdehnen oder Zusammenziehen der Leitungsspirale geringfügige Rückstellkräfte auftreten, die aber durch geeignet glatte Formgebung der Kabelwandung bzw. der Bauteile gering gehalten werden können. Das Überwerfen einzelner Spiralgänge wird durch die Formgebung der Führung verhindert. Sofern in diesem Zusammenhang von einem Fahrzeug mit einer Lenkergabel die Rede ist, bedeutet dies typischerweise, dass an der Lenkergabel oben ein manuell betätigbarer Lenker angebracht ist, wie bei fast jedem Fahrrad oder Motorrad. Die Erfindung ist allerdings auch auf Fahrzeuge anwendbar, bei denen die Lenkergabel keinen Lenker aufweist, sondern über eine Kopplung mit einer separat geführten Lenkstange verbunden ist, wie bei Lastenfahrrädern oder Kindertransportfahrrädern, bei denen der Transportraum hinter dem Vorderrad bzw. der Lenkergabel aber vor der Lenkstange angeordnet ist.

Gemäß einer vorteilhaften Ausbildung der Erfindung ist die Vorrichtung mehrgängig für verschiedene Leitungen ausgebildet. In jedem Schraubengang kann eine eigene Leitung geführt werden, die mit einer anderen Leitung in einem anderen Helixgang nicht kollidiert, was die Gefahr von Beschädigungen im Langzeitgebrauch vermindert.

Gemäß einer ersten vorteilhaften Weiterbildung dieser Ausbildung der Erfindung sind die schraubenförmigen Führungen für zwei Leitungen axial hintereinander angeordnet. Bei dieser Ausbildung lassen sich die beiden Leitungen vollkommen getrennt voneinander axial hintereinander anordnen. Diese Ausbildung benötigt größeren axialen Bauraum, dafür einen schmalen Ringspalt zwischen Steuerrohr und Gabelschaft.

Gemäß einer zweiten vorteilhaften Weiterbildung dieser Ausbildung der Erfindung sind die schraubenförmigen Führungen für zwei Leitungen radial übereinander angeordnet. Diese Ausbildung benötigt weniger axialen Bauraum, dafür einen breiteren Ringspalt zwischen Steuerrohr und Gabelschaft.

Gemäß einer weiteren vorteilhaften Weiterbildung der Erfindung weist jede Führung mindestens 3, vorzugsweise zwischen 4 und 12, besonders vorzugsweise 5 bis 8 Windungen auf. Je mehr Windungen vorhanden sind, umso größer ist der Bewegungsspielraum der Leitung bzgl. des Lenkereinschlages. Wenn der Ringraum zwischen Gabelschaft und Steuerrohr groß genug ist - also das Steuerrohr groß genug ist - ist eine Windung bereits ausreichend. Je enger der Ringraum in radialer Richtung ist, um so mehr Windungen sind jedoch nötig. Beschränkt wird die maximale Windungszahl durch die zur Verfügung stehende Länge des Steuerrohres und die Anordnung der Öffnungen für den Durchtritt der Leitung(en) im Steuerrohr bzw. der Lenkergabel.

Gemäß einer weiteren vorteilhaften Weiterbildung der Erfindung besteht die Vorrichtung aus einer Innenstruktur, von der aus sich eine Wendelfläche (Helikoide) nach radial außen erstreckt. Auf diese Weise wird eine baulich einfache und kompakte Anordnung bereitgestellt, die auf einfache Weise mit der Leitung beschickt werden kann. Dies erfolgt dadurch, dass die Leitung in die schraubenförmige Führung, vorzugsweise einen Kanal, eingelegt wird.

Gemäß einer weiteren vorteilhaften Weiterbildung dieser Ausbildung besteht die Vorrichtung aus einer Innenstruktur und einer Außenhülse, zwischen denen sich die Wendelfläche (36) erstreckt. Dadurch ist die Leitung geschützt im Inneren der Vorrichtung angeordnet.

Gemäß einer vorteilhaften Weiterbildung kann die Außenhülse auf die Innenhülse bzw. die Wendelfläche aufgeschoben werden. Vorzugsweise hat die Innenstruktur am einen und die Außenhülse am anderen axialen Ende eine axiale Endabdeckung, um das Eindringen von Fremdkörpern und Schmutz zu vermindern. Besonders bevorzugt ist die obere Endabdeckung an der Innenstruktur und die untere Endabdeckung an der Außenhülse angebracht. Vorzugsweise ist eine obere Leitungsöffnung für die Durchführung der mindestens einen Leitung in der oberen Endabdeckung ausgebildet. Vorzugsweise ist eine untere Leitungsöffnung für die Durchführung der mindestens einen Leitung in der Nähe der unteren Endabdeckung in der Außenhülse angeordnet. Im Rahmen der Erfindung kann die obere Endabdeckung aber auch mit der Außenhülle und die untere Endabdeckung mit der Innenhülle verbunden sein.

Alternativ ist es auch möglich, auf die Außenhülse zu verzichten, also die Spiralfläche ohne die Außenhülse auszubilden, wobei die Spiralfläche eine derartige radiale Erstreckung aufweisen muss, dass die Leitung nicht über den äußeren Rand der Spiralfläche gelangen kann.

Alternativ kann die Wendelfläche auch an der Außenhülle angebracht oder angeformt sein und nach innen ragen.

Gemäß einer weiteren vorteilhaften Weiterbildung der Erfindung ist die Vorrichtung als flexibles Spiralrohr ausgebildet, dessen erstes Ende an dem Steuerrohr und dessen zweites Ende an dem Gabelschaft fixiert ist. Bei dieser Ausbildung verbleibt die Leitung gegenüber dem Spiralrohr örtlich nahezu unverändert und beide gemeinsam verformen sich elastisch unter Verringerung bzw. Vergrößerung des Wickeldurchmessers.

Gemäß einer weiteren vorteilhaften Weiterbildung dieser Ausbildung weist das Spiralrohr einen Längsschlitz auf, der vorzugsweise auf der Außenseite des Spiralrohres angeordnet ist und im normalen Zustand geschlossen ist, also durch elastisches Auseinanderbiegen der Schlitzränder geöffnet wird, um die Leitung einzuführen. Danach verschließt sich der Schlitz durch elastische Rückbewegung der Schlitzränder in die Ausgangslage, so dass die Leitung im Gebrauch nicht mehr austreten kann. Bei dieser Gestaltung ist die Einführung der Leitung in das Spiralrohr einfacher als wenn dieses axial hindurchgeschoben werden muss.

Gemäß einer weiteren vorteilhaften Weiterbildung der Erfindung ist die Vorrichtung als mehrteilige Hülse mit am Außenumfang angeformten Führungsvorsprüngen ausgebildet, die auf einer Spirallinie auf dem Umfang der Hülse liegen. Bei einer solchen Ausbildung mit einer Teilung der Hülse in Axialrichtung, die also aus mindestens zwei Schalenteilen besteht und ausgebildet ist, den Gabelschaft eng zu umschlingen, wird die Leitung zwischen die vorzugsweise stiftartigen Vorsprünge spiralförmig gelegt. Die Vorsprünge bzw. Stifte haben eine derartige radiale Erstreckung, dass die Leitung bei einer maximalen Verformung nicht radial über die Vorsprünge hinausragen kann.

Gemäß einer alternativen Ausbildung sind Führungsvorsprünge direkt an dem Gabelschaft angeformt, werden also beim Herstellungsvorgang des Gabelschaftes mit erzeugt.

Gemäß einer weiteren vorteilhaften Weiterbildung der Erfindung ist die Vorrichtung als Spiralfeder ausgebildet, wobei deren erstes Ende an dem Steuerrohr und deren zweites Ende an dem Gabelschaft fixiert ist und die mindestens eine Leitung an der Spiralfeder befestigbar ist, beispielsweise mittels Kabelbindern. Auch bei dieser Ausbildung bilden die Spiralfeder und die Leitung ein gemeinsam bewegtes Bauteil.

Gemäß einer weiteren vorteilhaften Weiterbildung dieser Ausbildung besteht die Spiralfeder aus einem Federstahl oder einer Kunststoffspirale. Die Ausführung aus Federstahl ist platzsparender und langlebiger, die Ausführung aus Kunststoff bei genügender Stückzahl einfacher zu produzieren und kann dabei vorteilhafterweise gleich Befestigungsmittel für die Leitung angeformt haben.

Die Erfindung betrifft ferner ein Zweirad, welches eine erfindungsgemäße Vorrichtung nach einem oder mehreren Aspekten bzw. Ausführungsformen montiert hat. Dazu zählen Fahrräder, E-Bikes, Pedelecs oder zweirädrige Lastenräder.

Die Erfindung betrifft ferner ein Dreirad, welches eine erfindungsgemäße Vorrichtung nach einem oder mehreren Aspekten bzw. Ausführungsformen montiert hat. Dazu zählen Kinderdreiräder, dreirädrige Lastenräder sowie motorisch angetriebene sog. Trikes.

Die Erfindung betrifft ferner ein vierrädriges Fahrzeug mit Lenker, wie ein vierrädriges Lastenrad oder ein Quad, welches eine erfindungsgemäße Vorrichtung nach einem oder mehreren Aspekten bzw. Ausführungsformen montiert hat.

Weitere Vorteile, Merkmale und Einzelheiten ergeben sich aus der nachfolgenden Beschreibung, in der - gegebenenfalls unter Bezug auf die Zeichnungen - mehrere Ausführungsbeispiele im Einzelnen beschrieben sind. Gleiche, ähnliche und/oder funktionsgleiche Teile sind mit gleichen Bezugszeichen versehen.

Es zeigen:
- Figur 1:: eine Darstellung des Frontbereiches eines Zweirades;
- Figur 2:: eine perspektivische Ansicht eines Ausschnittes einer Lenkergabel mit einer ersten Ausführung der erfindungsgemäßen Vorrichtung;
- Figur 3:: eine perspektivische Ansicht der Ausführung von Figur 2 ohne die Außenhülse;
- Figur 4:: eine Seitenansicht der Ausführung von Figur 2 und 3;
- Figur 5:: eine Schnittdarstellung der Ausführung von Figur 2 bis 4;
- Figur 6:: eine perspektivische Darstellung einer zweiten Ausführung der erfindungsgemäßen Vorrichtung ohne Leitung;
- Figur 7:: eine perspektivische Darstellung der zweiten Ausführung gemäß Figur 6 mit Leitung;
- Figur 8:: eine perspektivische Darstellung einer dritten Ausführung der erfindungsgemäßen Vorrichtung;
- Figur 9:: eine Schnittdarstellung einer vierten Ausführung der erfindungsgemäßen Vorrichtung;
- Figur 10:: eine Schnittdarstellung einer fünften Ausführung der erfindungsgemäßen Vorrichtung;
- Figur 11:: eine Schnittdarstellung einer sechsten Ausführung der erfindungsgemäßen Vorrichtung;
- Figur 12:: eine Schnittdarstellung einer siebten Ausführung der erfindungsgemäßen Vorrichtung;
- Figur 13:: eine Schnittdarstellung einer achten Ausführung der erfindungsgemäßen Vorrichtung.

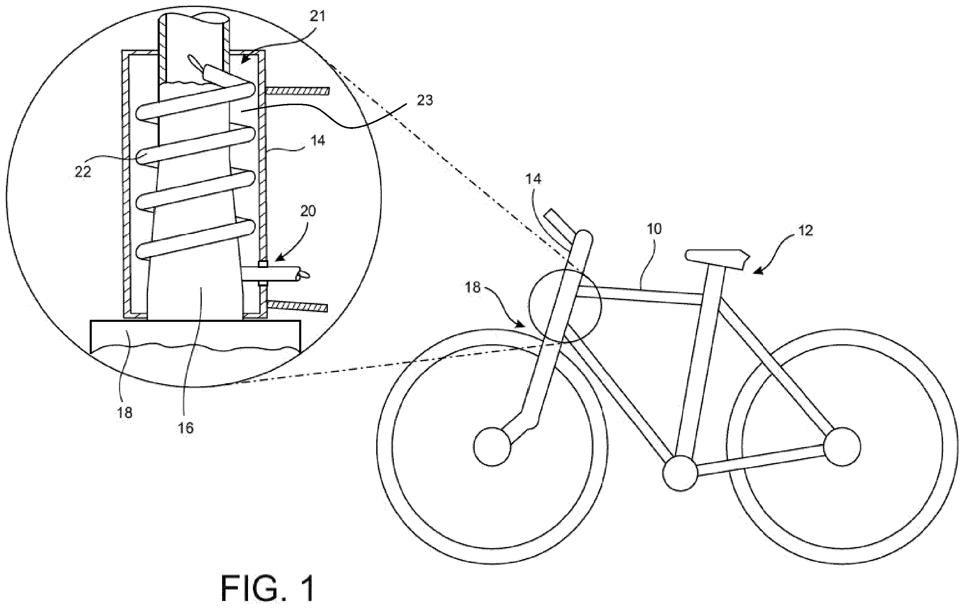

Figur 1 zeigt einen Fahrzeugrahmen 10 eines Zweirades 12, dessen Vorderende ein Steuerrohr 14 aufweist, in dem ein Gabelschaft 16 einer Lenkergabel 18 drehbar gelagert ist. Der Fahrzeugrahmen 10 weist mindestens eine Bohrung 20 zur Durchführung einer flexiblen Leitung 22 auf, die sich in einem Ringraum 23 zwischen dem Steuerrohr 14 und dem Gabelschaft 16 befindet und bei Drehung der Lenkergabel 18 relativ zum Fahrzeugrahmen 10 nicht beschädigt werden soll. Der Gabelschaft 16 weist eine Bohrung 21 zur Durchleitung der Leitung 22 ins Innere des Gabelschaftes 16 und zur Weiterleitung nach oben auf.

Bei der Leitung 22 kann es sich um eine stromführende Leitung, z.B. für Beleuchtung oder eine Hydraulikleitung für Bremsen oder hydraulische Federungen, Glasfaserleitungen oder Bowdenzüge handeln. Auch kann es sich um eine Signalleitung zur Steuerung elektronischer Einrichtungen handeln. Die Leitung 22 kann ein- oder mehradrig sein oder es können mehrere verschiedene oder sogar verschiedenartige Leitungen 22a, 22b zusammengeführt sein.

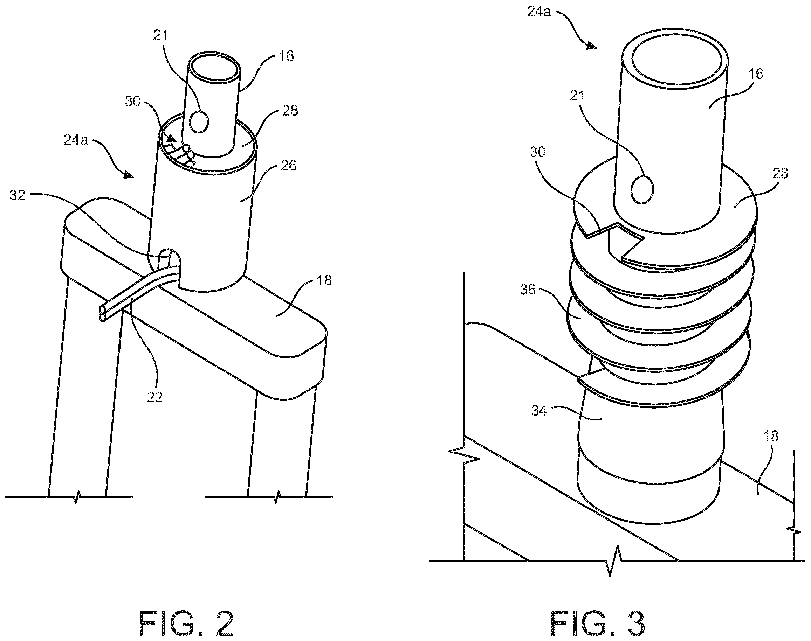

Figur 2 zeigt eine perspektivische Darstellung einer ersten Ausführungsform einer erfindungsgemäßen Leitungsführungsvorrichtung 24a, von der in dieser Figur eine Außenhülse 26 sowie eine obere Stirnabdeckung 28 mit einer oberen Öffnung 30 für den Durchtritt der beispielhaft als zweiadrig ausgebildeten Leitung 22 sowie eine untere Öffnung 32 für die gleiche Leitung 22 gezeigt sind. Im Gabelschaft 16 ist die Bohrung 21 für den Durchtritt der flexiblen Leitung 22 ins Innere des Gabelschaftes 16 ausgebildet. Die Bohrung 21 und die Öffnung 30 liegen vorzugsweise in axialer Richtung hintereinander. Es sei angemerkt, dass die Erfindung eine Leitungsführung ins Innere des Gabelschaftes 16 nicht erfordert, sondern die Leitung 22 auch außen neben dem Gabelschaft 16 nach oben geführt sein kann, in welchem Fall die Bohrung 21 natürlich entfällt.

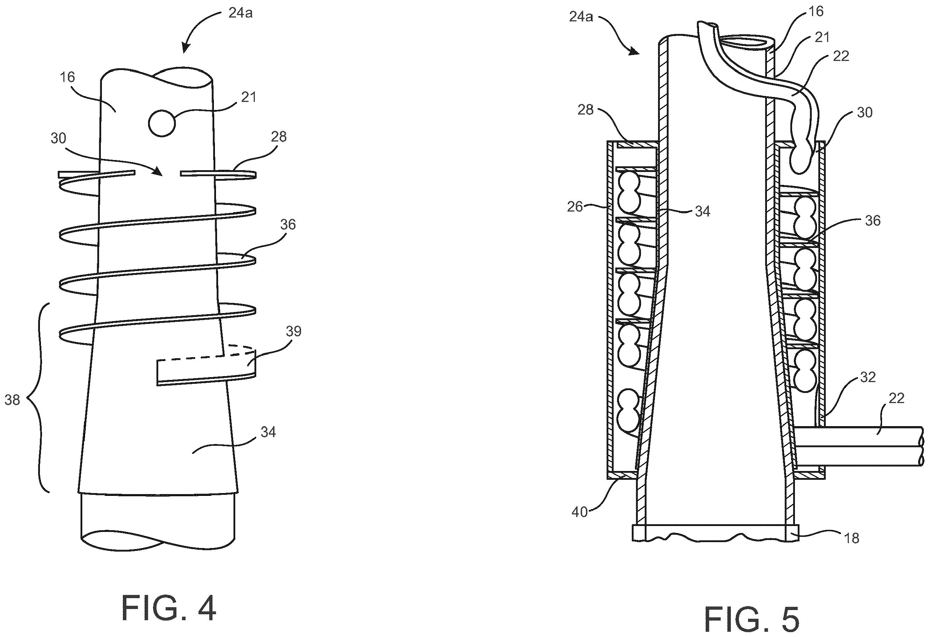

In Figur 3 ist die gleiche Vorrichtung 24a ohne die Außenhülse 26 dargestellt. Zu sehen ist eine hülsenartige Innenstruktur (Innenhülse) 34, die den Gabelschaft 16 auf eine Weise umschließt, so dass sich die Innenhülse 34 bei jeder Drehung des Gabelschaftes 16 mitdreht. Dies kann mittels Form- oder Reibschluss oder Kleben oder auch durch Befestigung mittels Schraube erfolgen. Die Innenstruktur 34 muss keine Hülse sein, es kann sich auch um eine ringförmige Gitterstruktur handeln. An der Innenstruktur/Innenhülse 34 ist bei dieser Ausführung die obere Stirnabdeckung 28 angeformt. An der Innenhülse 34 angebracht oder angeformt oder daran anliegend befindet sich eine schraubenförmige Führung in Gestalt einer Wendelfläche 36 (Helikoide) mit drei Windungen. In der dargestellten Ausführung hat die Wendelfläche vier Windungen, was in Figur 4 besser zu erkennen ist. In Figur 4 ist auch dargestellt, dass der Gabelschaft 16 wegen eines Steuerlagers einen konischen Abschnitt aufweisen kann und dementsprechend die Innenhülse 34 in diesem Bereich 38 ebenfalls konisch auszubilden ist, wodurch eine reibschlüssige Verbindung durch axiales Aufpressen der Innenhülse 34 auf den Gabelschaft 16 erfolgen kann.

In den Figuren 3 bis 5 ist bei der Leitungsführungsvorrichtung 24a eine einzelne Wendelfläche 36 zur Ausbildung eines Führungskanals für eine Leitung 22 dargestellt. Es ist alternativ im Rahmen der Erfindung möglich, mehrere Wendelflächen zur Ausbildung einer mehrgängigen Schraube bzw. von mehreren Kanälen zur individuellen Führung von mehreren Leitungen 22 vorzusehen. In der Seitenansicht von Fig. 4 ist ein Kragen 39 gestrichelt dargestellt, der bei einer alternativen Ausbildung, die auf eine Außenhülse 26 verzichtet, entlang des äußeren Randes der gesamten Wendelfläche 36 angeordnet wäre, und damit einen radialen Außenanschlag für die Leitung 22 darstellt.

In Figur 5 ist ein Axialschnitt dieser Leitungsführungsvorrichtung 24a gezeigt, wo zu sehen ist, dass an der Außenhülse 26 eine untere Stirnabdeckung 40 angeformt ist, wodurch diese Vorrichtung bis auf die beiden Öffnungen 30, 32 (Figur 2) ein abgeschlossenes Gebilde darstellt.

Die Außenhülse 26 ist mittels nicht dargestellter Fixiermittel form- oder kraftschlüssig im Steuerrohr 14 angebracht und damit fest mit dem Fahrzeugrahmen 10 verbunden. Die "Außenhülse" kann auch Teil des Rahmens sein oder komplett entfallen. Gleichzeitig sind die Innenhülse 34 und die Wendelfläche 36 drehfest mit dem Gabelschaft 16 verbunden und drehen sich bei Betätigung des Lenkers mit. Es entsteht daher bei einem Lenkeinschlag eine rotatorische Relativbewegung zwischen Wendelfläche 36 und Außenhülse 26 und damit auch zwischen der oberen 30 und unteren 32 Öffnung. Die Außenhülse 26 ist derart im Steuerrohr 14 angeordnet, dass die Bohrung 20 (Figur 1) mit der unteren Öffnung 32 fluchtet, so dass der durch die untere Öffnung 32 austretende Teil der Leitung 22 durch die Bohrung 20 (Figur 1) geführt werden kann.

Wie in Figur 5 zu sehen, ist die Leitung 22 zwischen der Wendelfläche 36 etwa räumlich radial in der Mitte zwischen Innenhülse 34 und Außenhülse 26 geführt (Innenhülse 34 und Außenhülse 26 und Wendelfläche 36 bilden gemeinsam eine Führung bzw. einen Kanal für die Leitung), so dass bei einer Lenkerbewegung aufgrund der Relativdrehung zwischen Innenhülse 34 und Außenhülse 26 in einem Fall an der Leitung 22 gezogen wird und sich diese dann enger an die Innenhülse 34 anschmiegt und im anderen Fall gedrückt wird, so dass der Spiralradius der Leitung 22 etwas zunimmt und diese sich vor allem im oberen Bereich mehr der Außenhülse 26 annähert. Über nicht näher dargestellte Fixiermittel (z.B. Kabelbinder) ist die Leitung 22 im Bereich der beiden Öffnungen 30, 32 an den zugeordneten Bauteilen 34, 26 (oder der Bohrung 20 und der Bohrung 21) fixiert, damit die Bewegung der Leitung 22 ausschließlich im Inneren der Vorrichtung 24a erfolgt.

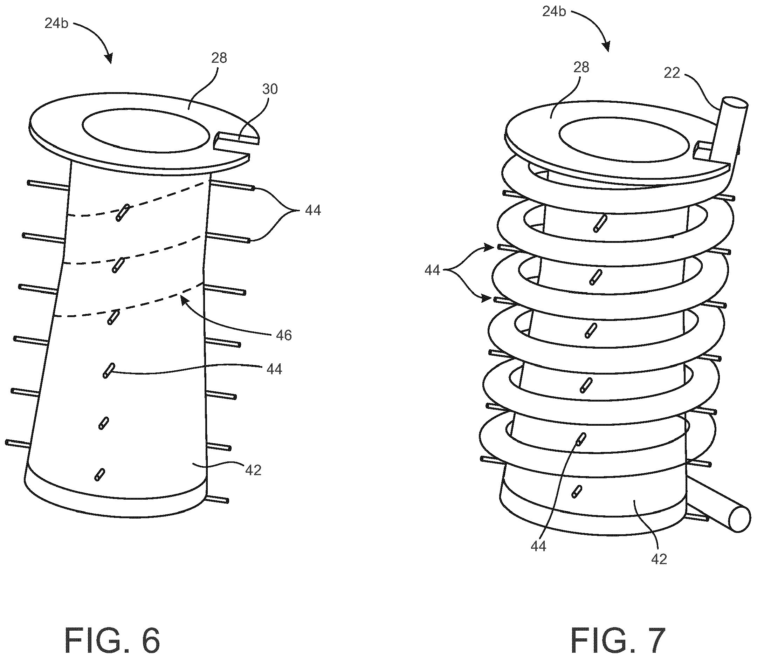

Eine zweite Ausführung einer Leitungsführungsvorrichtung 24b ist in den Figuren 6 und 7 dargestellt, in Figur 6 ohne und in Figur 7 mit der Leitung 22. Diese Ausbildung unterscheidet sich von der ersten Ausführung einer Leitungsführungsvorrichtung 24a dadurch, dass keine Wendelfläche vorhanden ist und stattdessen von der Hülse 42 vorzugsweise stiftartige Führungsvorsprünge 44 nach außen abstehen, die auf einer spiralförmigen Linie 46 liegen und damit eine Führung der Leitung 22 zwischen den Stiften 44 gewährleisten. Die Stifte 44 können radial ausgerichtet sein, können aber auch schräg zur Mittelachse verlaufen. Auch können die Stifte 44 geradlinig sein, aber genauso eine andere (vorzugsweise gebogene oder hakenartige) Form aufweisen. In einer ersten Ausführungsform umfasst diese Ausbildung 24b in gleicher Weise wie die erste Ausführungsform 24a eine zusätzliche (nicht dargestellte) Außenhülse 26, um eine geschlossene Form für die Leitung 22 zu bilden. In einer alternativen Ausbildung kann die Außenhülse 26 entfallen.

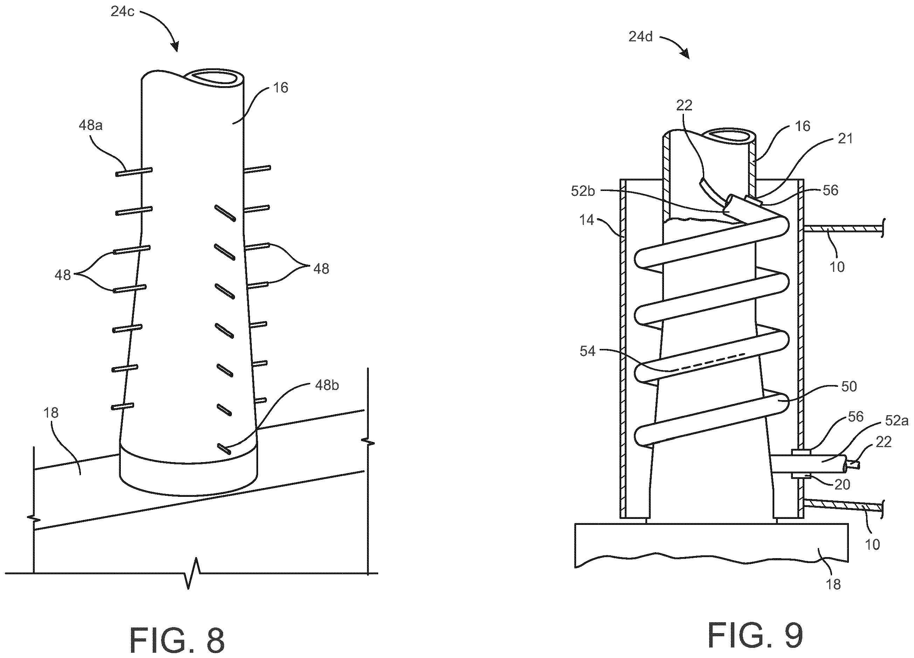

Eine dritte Ausführung einer Leitungsführungsvorrichtung 24c ist in Figur 8 gezeigt, die ähnlich der zweiten Ausführung 24b (Figur 6 und 7) ist, mit dem Unterschied, dass auf eine Hülse (34, 42) vollständig verzichtet wird und vielmehr Stifte 48 direkt an dem Gabelschaft 16 angeformt sind. Bei dieser Ausbildung wird die (nicht gezeigte) Leitung oben am obersten Stift 48a befestigt (z.B. mittels eines Kabelbinders) und verläuft darunter spiralförmig den Gabelschaft 16 mit Abstand umgebend bis zum untersten Stift 48b und verläuft von dort in die Bohrung 20 im Fahrzeugrahmen 10 (Figur 1). Bei dieser Ausbildung ist wichtig, dass die Stifte 48 eine ausreichende radiale Länge besitzen, so dass der Mittelpunkt der Leitung 22 unter keinen Umständen über das Ende der Stifte 48 hinausragen kann. Die Stifte 48 werden bei der Fertigung vorzugsweise in vorgefertigte Löcher am Umfang des Gabelschaftes eingepresst. Die Stifte 48 könnten am Ende auch ein nach oben ragendes Hakenende aufweisen, durch das ein Abgleiten von den Stiften 48 verhindert wird.

Eine vierte Ausführung einer Leitungsführungsvorrichtung 24d ist in Figur 9 gezeigt, die als elastisches Spiralrohr 50 ausgebildet ist, dessen unteres Ende 52a am Fahrzeugrahmen 10 im Bereich der Bohrung 20 und dessen oberes Ende 52b weiter oben am Gabelschaft 16, beispielsweise mittels eines Kabelbinders, befestigt ist. Alternativ kann die Leitung 22 in der Bohrung 20 im Rahmen 10 und der Bohrung 21 im Gabelschaft 16 mittels einer Kabeltülle 56 befestigt werden.

Das Spiralrohr 50 hat einen hinreichend großen Durchmesser, damit die Leitung 22 hindurchgeschoben werden kann. Alternativ ist es möglich, das elastische Spiralrohr 50 in Längsrichtung mit einem durchgehenden Längsschlitz 54 (nur in einem kleinen Abschnitt dargestellt) zu versehen, der im Normalzustand geschlossen ist aber zur Einbringung der Leitung 22 geöffnet werden kann. Der Längsschlitz 54 ist vorzugsweise nicht auf der bezüglich der Wendelrichtung radialen Außenseite des Spiralrohres 50 angeordnet, damit die Leitung 22 nicht am Schlitz 54 scheuert und beschädigt wird.

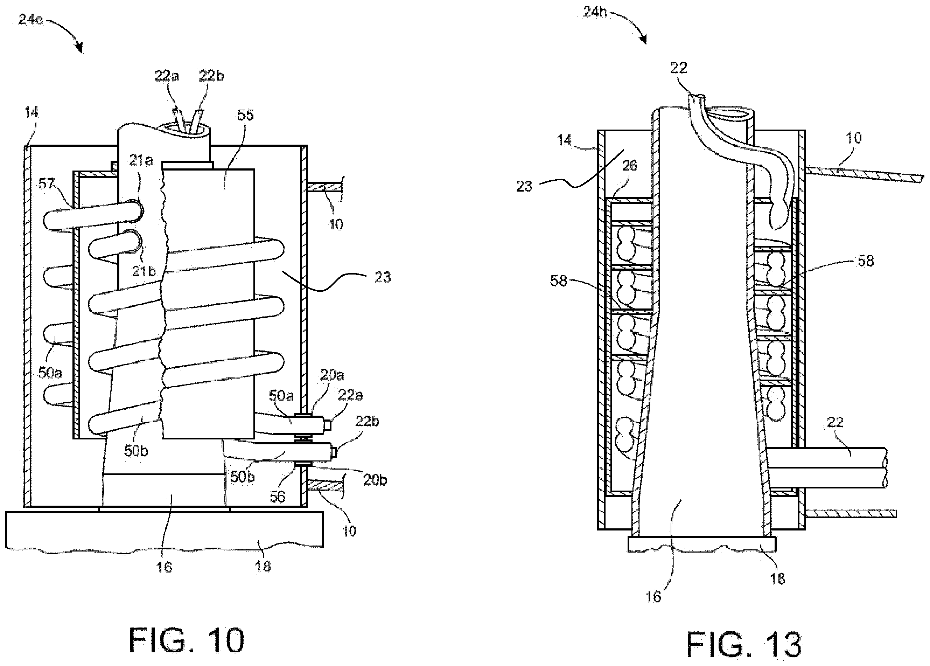

Figur 10 zeigt eine Leitungsführungsvorrichtung 24e für zwei getrennte flexible Leitungen 22a, 22b, die radial getrennt voneinander parallel zueinander in zwei elastisch eigensteifen Spiralrohren 50a, 50b geführt sind, und zwar eine äußere Leitung 22a und eine durch eine Trennhülse 55 getrennte innere Leitung 22b. Das Trennrohr 55 ist nicht notwendig aber bevorzugt, um die beiden Spiralrohre 50a, 50b zu trennen. Beide Spiralrohre 50a, 50b treten durch getrennte Bohrungen 20a, 20b durch das Steuerrohr 14 in den Ringraum zwischen Steuerrohr 14 und Gabelschaft 16 ein und durch Bohrungen 21a, 21b in das Innere des Gabelschaftes 16 ein. Die Trennhülse 55 ist am Gabelschaft 16 befestigt. Diese benötigt für die Durchführung der äußeren Leitung 22a eine Bohrung 57. Es ist alternativ auch möglich, eine gemeinsame Bohrung 20a bzw. 21a für beide Spiralrohre 50a, 50b vorzusehen.

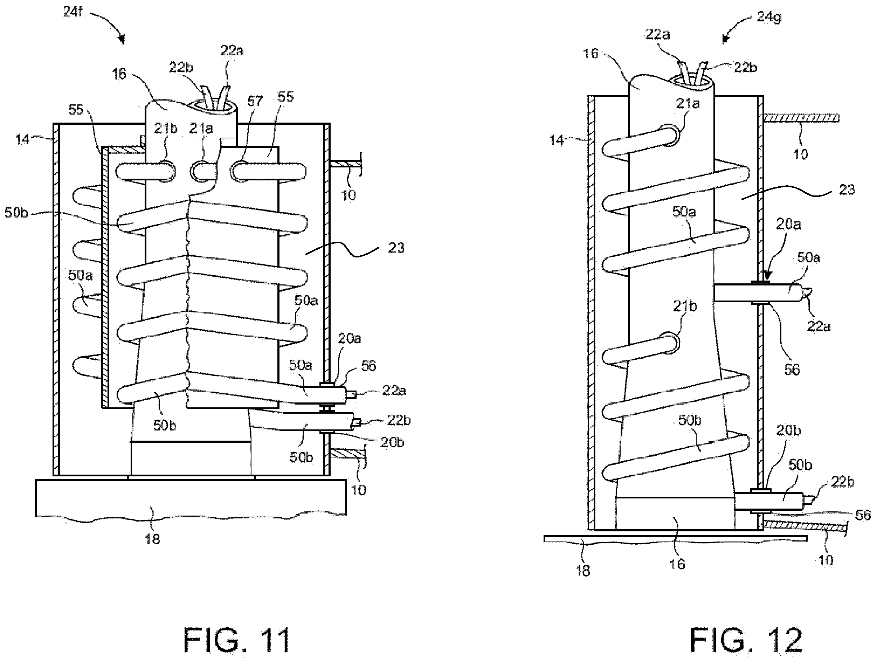

Figur 11 zeigt eine weitere Ausbildung einer Leitungsführungsvorrichtung 24f, die im Wesentlichen derjenigen von Figur 10 gleicht mit dem Unterschied, dass die beiden flexiblen Leitungen 22a, 22b nicht parallel zueinander, sondern gegenläufig zueinander geführt sind, also eine links herum drehend, die andere rechts herum drehend.

Figur 12 zeigt eine weitere Ausbildung einer Leitungsführungsvorrichtung 24g, bei der zwei flexible Leitungen 22a, 22b axial hintereinander geführt sind. Diese treten über vertikal beabstandete Bohrungen 20a, 20b durch das Steuerrohr 14 und durch gleichermaßen beabstandete Bohrungen 21a, 21b in das Innere des Gabelschaftes 16 ein. Im dargestellten Ausführungsbeispiel weisen die Leitungen ca. 2,8 Windungen auf. Die Bohrung 20a für den Durchtritt der oberen flexiblen Leitung 22a liegt vorzugsweise etwas oberhalb der Bohrung 21b für den Durchtritt der unteren Leitung 22b in den Gabelschaft 16, in dem diese nach oben weitergeführt sind.

Figur 13 zeigt eine weitere Ausbildung einer Leitungsführungsvorrichtung 24h ähnlich der von Figur 5, bei der eine Wendelfläche 58 an der Außenhülse 26 nach innen ragend angeformt ist, so dass auf eine Innenhülse (34 in Figur 5) verzichtet werden kann. Die an der Außenhülse 26 angeformte Wendelfläche 58 ragt unter Beibehaltung eines schmalen Schlitzes von wenigen Millimetern fast bis zum Gabelschaft 16. Die Außenhülse 26 ist am Steuerrohr fixiert, beispielsweise mittels Einpressen, Kleben oder anderer Mittel wie Schrauben, Muttern oder Stifte. Es wäre im Rahmen dieser Ausbildung auch möglich, einen Kragen ähnlich wie Kragen 39 von Figur 4 vorzusehen, um zu verhindern, dass die Leitung 22 am Gabelschaft 16 scheuert.

### Bezugszeichenliste

- 10: Fahrzeugrahmen
- 12: Zweirad
- 14: Steuerrohr
- 16: Gabelschaft
- 18: Lenkergabel
- 20 + a,b: Bohrung im Rahmen
- 21 + a,b: Bohrung im Gabelschaft
- 22 + a,b: Leitung
- 23: Ringraum
- 24a-h: Leitungsführungsvorrichtung
- 26: Außenhülse
- 28: obere Stirnabdeckung
- 30: obere Öffnung
- 32: untere Öffnung
- 34: Innenhülse
- 36: Wendelfläche
- 38: konischer Bereich
- 39: Kragen
- 40: untere Stirnabdeckung
- 42: Hülse
- 44: Stifte
- 46: spiralförmige Linie
- 48a,b: Stifte
- 50 +a,b: Spiralrohr
- 52a,b: Enden
- 54: Schlitz
- 55: Trennhülse
- 56: Kabeltülle
- 57: Bohrung
- 58: Wendefläche

## Patentansprüche

1. Vorrichtung zur Führung mindestens einer flexiblen Leitung im Ringraum (23) zwischen einem Steuerrohr (14) eines Fahrzeugrahmens (10) und einem im Steuerrohr (14) drehbar gelagerten Gabelschaft (16) einer Lenkergabel (18) von einem Fahrzeug, **dadurch gekennzeichnet, dass** diese mindestens ein Formelement (36, 44, 48) zur Ausbildung mindestens einer schraubenförmigen Führung von mindestens einer Windung für die mindestens eine Leitung (22) im Ringraum ausbildet.

2. Vorrichtung nach Anspruch 1, **dadurch gekennzeichnet, dass** diese mehrgängig für verschiedene Leitungen (22, 22a, 22b) ausgebildet ist.

3. Vorrichtung nach Anspruch 2, **dadurch gekennzeichnet, dass** die schraubenförmigen Führungen für zwei Leitungen (22a, 22b) axial hintereinander angeordnet sind.

4. Vorrichtung nach Anspruch 2, **dadurch gekennzeichnet, dass** die schraubenförmigen Führungen für zwei Leitungen (22a, 22b) radial übereinander angeordnet sind.

5. Vorrichtung nach einem oder mehreren der vorhergehenden Ansprüche, **dadurch gekennzeichnet, dass** jede Führung mindestens 3, vorzugsweise zwischen 4 und 12, besonders bevorzugt 5 - 8 Windungen aufweist.

6. Vorrichtung nach einem oder mehreren der vorhergehenden Ansprüche, **dadurch gekennzeichnet, dass** diese aus einer Innenstruktur (34) besteht, von der aus sich nach radial außen eine Wendelfläche (36) erstreckt.

7. Vorrichtung nach Anspruch 6, **dadurch gekennzeichnet, dass** diese aus der Innenstruktur (34) und einer Außenhülse (26) besteht, zwischen denen sich die Wendelfläche (36) erstreckt.

8. Vorrichtung nach Anspruch 7, **dadurch gekennzeichnet, dass** diese eine obere axiale Endabdeckung (28) und eine untere axiale Endabdeckung (40) umfasst, von denen eine an der Innenstruktur (34) und die andere an der Außenhülse (26) angeformt oder angebracht ist.

9. Vorrichtung nach einem oder mehreren der Ansprüche 1 bis 5, **dadurch gekennzeichnet, dass** diese aus einer Außenstruktur (26) besteht, von der aus sich nach radial innen eine Wendelfläche (58) erstreckt.

10. Vorrichtung nach einem oder mehreren der Ansprüche 1 bis 5, **dadurch gekennzeichnet, dass** diese als flexibles Spiralrohr (50) ausgebildet ist, dessen erstes Ende (52a) an dem Steuerrohr (14) und dessen zweites Ende (52b) an dem Gabelschaft (16) fixiert ist.

11. Vorrichtung nach Anspruch 10, **dadurch gekennzeichnet, dass** das Spiralrohr (50) einen Längsschlitz (54) aufweist.

12. Vorrichtung nach einem der Ansprüche 1 bis 6, **dadurch gekennzeichnet, dass** diese Führung eine Hülse (42) mit am Außenumfang angeformten Führungsvorsprüngen (44) umfasst, die auf einer Spirallinie (46) auf dem Umfang der Hülse (42) liegen.

13. Vorrichtung nach Anspruch 1, **dadurch gekennzeichnet, dass** diese als am Gabelschaft (16) angeformte Führungsvorsprünge (48) ausgebildet ist, die auf einer spiralförmigen Linie auf dem Umfang des Gabelschaftes (16) liegen.

14. Vorrichtung nach Anspruch 12 oder 13, **dadurch gekennzeichnet, dass** die Führungsvorsprünge (44, 48) als Stifte (44, 48) ausgebildet sind.

15. Vorrichtung nach Anspruch 1, **dadurch gekennzeichnet, dass** diese als Spiralfeder gebildet ist, wobei deren erstes Ende an dem Steuerrohr (14) und deren zweites Ende an dem Gabelschaft (16) fixiert ist und die mindestens eine Leitung (22) an der Spiralfeder befestigbar ist.

16. Vorrichtung nach Anspruch 15, **dadurch gekennzeichnet, dass** die Spiralfeder aus einem Federstahl oder einer Kunststoffspirale besteht.

17. Verwendung der Vorrichtung nach einem der vorhergehenden Ansprüche zur Führung von Signalleitungen und/oder Stromführungsleitungen und/oder Hydraulikleitungen und/oder Pneumatikleitungen und/oder Glasfaserleitungen und/oder Bowdenzüge.

18. Zweirad, versehen mit einer Vorrichtung gemäß einem der Ansprüche 1 bis 17.

19. Dreirad, versehen mit einer Vorrichtung gemäß einem der Ansprüche 1 bis 17.

20. Vierrad, versehen mit einer Vorrichtung gemäß einem der Ansprüche 1 bis 17.

## Claims

1. A device for guiding at least one flexible line in the annular space (23) between a head tube (14) of a vehicle frame (10) and a steerer tube (16) of a steerer fork (18) of a vehicle which is rotatable in the head tube (14), **characterized in that** it forms at least one form element (36, 44, 48) for the formation of at least one helical guide of at least one winding for at least one line (22) in the annular space.

2. The device according to Claim 1, **characterized in that** it is multi-speed designed for different lines (22, 22a, 22b).

3. The device according to Claim 2, **characterized in that** the helical guides for two lines (22a, 22b) are arranged axially one behind the other.

4. The device according to Claim 2, **characterized in that** the helical guides for two guides (22a, 22b) are arranged radially on top of one another.

5. The device according to one or a plurality of the preceding claims, **characterized in that** each guide comprises at least 3 windings, preferably between 4 and 12 windings, being particularly preferred, 5 - 8 windings.

6. The device according to one or a plurality of the preceding claims, **characterized in that** it consists of an internal structure (34) from which a spiral surface (36) extends radially outwards.

7. The device according to Claim 6, **characterized in that** it consists of the inner structure (34) and an outer sleeve (26), between which the spiral surface (36) extends.

8. The device according to Claim 7, **characterized in that** it comprises an upper axial end cover (28) and a lower axial end cover (40), one of which is preformed onto or attached to the inner structure (34) and the other to the outer sleeve (26).

9. The device according to one or a plurality of the Claims 1 to 5, **characterized in that** it consists of an external structure (26) from which a spiral surface (58) extends radially inwards.

10. The device according to one or a plurality of the Claims 1 to 5, **characterized in that** it is designed as a flexible spiral tube (50), the first end of which (52a) is fixed to the head tube (14) and the second end (52b) to the steerer tube (16).

11. The device according to Claim 10, **characterized in that** the spiral tube (50) comprises a longitudinal slot (54).

12. The device according to any one of the Claims 1 to 6, **characterized in that** this guide comprises a sleeve (42) with guide projections (44) preformed to the outer circumference, which lie on a spiral line (46) on the circumference of the sleeve (42).

13. The device according to Claim 1, **characterized in that** it is formed as guide projections (48) preformed to the steerer tube (16) which lie on a spiral line on the circumference of the steerer tube (16).

14. The device according to Claim 12 or 13, **characterized in that** the guide projects are (44, 48) designed as pins (44, 48).

15. The device according to Claim 1, **characterized in that** it is designed as a spiral spring, wherein the first end of which is fixed to the head tube (14) and the second end to the steerer tube (16) and at least one guide (22) can be attached to the spiral spring.

16. The device according to Claim 15, **characterized in that** the spiral spring consists of a spring steel or a plastic spiral.

17. Use of the device according to any one of the preceding claims for the routing of signal lines and/or current lines and/or hydraulic lines and/or pneumatic lines and/or fibre-optic lines and/or Bowden lines.

18. A two-wheeler equipped with a device according to any one of the Claims 1 to 17.

19. A three-wheeler equipped with a device according to any one of the Claims 1 to 17.

20. A four-wheeler equipped with a device according to any one of the Claims 1 to 17.

## Revendications

1. Dispositif, destiné à guider au moins un câble flexible dans l'espace annulaire (23) entre un tube de direction (14) d'un châssis (10) de véhicule et une tige de fourche (16) logée en rotation dans le tube de direction (14) d'une fourche de direction (18) d'un véhicule, **caractérisé en ce qu'**il constitue au moins un élément de formage (36, 44, 48) pour constituer au moins un guidage hélicoïdal avec au moins une convolution pour l'au moins un câble (22) dans l'espace annulaire.

2. Dispositif selon la revendication 1, **caractérisé en ce qu'**il est conçu à filets multiples pour différents câbles (22, 22a, 22b).

3. Dispositif selon la revendication 2, **caractérisé en ce que** les guidages hélicoïdaux pour deux câbles (22a, 22b) sont placés l'un derrière l'autre en direction axiale.

4. Dispositif selon la revendication 2, **caractérisé en ce que** les guidages hélicoïdaux pour deux câbles (22a, 22b) sont placés en superposition en direction axiale.

5. Dispositif selon l'une quelconque ou plusieurs des revendications précédentes, **caractérisé en ce que** chaque guidage comporte au moins 3, de préférence entre 4 et 12, de manière particulièrement préférentielle, de 5 à 8 convolutions.

6. Dispositif selon l'une quelconque ou plusieurs des revendications précédentes, **caractérisé en ce qu'**il est constitué d'une structure interne (34) à partir de laquelle une surface hélicoïdale (36) s'étend vers l'extérieur en direction radiale.

7. Dispositif selon la revendication 6, **caractérisé en ce qu'**il est constitué de la structure interne (34) et d'une douille externe (26) entre lesquelles s'étend la surface hélicoïdale (36).

8. Dispositif selon la revendication 7, **caractérisé en ce qu'**il comprend un capuchon (28) d'extrémité supérieur en direction axiale et un capuchon (40) d'extrémité inférieur en direction axiale, dont l'un est surmoulé ou monté sur la structure interne (34) et l'autre sur la douille externe (26).

9. Dispositif selon l'une quelconque ou plusieurs des revendications 1 à 5, **caractérisé en ce qu'**il est constitué d'une structure externe (26) à partir de laquelle une surface hélicoïdale (58) s'étend vers l'intérieur en direction radiale.

10. Dispositif selon l'une quelconque ou plusieurs des revendications 1 à 5, **caractérisé en ce qu'**il est conçu sous la forme d'un serpentin (50) flexible, dont la première extrémité (52a) est fixée sur le tube de direction (14) et dont la deuxième extrémité (52b) est fixée sur la tige de fourche (16).

11. Dispositif selon la revendication 10, **caractérisé en ce que** le serpentin (50) comporte une fente allongée (54) .

12. Dispositif selon l'une quelconque des revendications 1 à 6, **caractérisé en ce que** ledit guidage comprend une douille (42) pourvue de saillies de guidage (44) surmoulées sur la circonférence externe, qui se situent sur une ligne en spirale (46) sur la circonférence de la douille (42).

13. Dispositif selon la revendication 1, **caractérisé en ce qu'**il est conçu sous la forme de saillies de guidage (48) surmoulées sur la tige de fourche (16), qui se situent sur une ligne en forme de spirale sur la circonférence de la tige de fourche (16).

14. Dispositif selon la revendication 12 ou 13, **caractérisé en ce que** les saillies de guidage (44, 48) sont conçues sous la forme de broches (44, 48).

15. Dispositif selon la revendication 1, caractérisé en qu'il est conçu sous la forme d'un ressort en spirale, la première extrémité de celui-ci étant fixée sur le tube de direction (14) et la deuxième extrémité de celui-ci étant fixée sur la tige de fourche (16) et l'au moins un câble (22) étant susceptible d'être fixé sur le ressort en spirale.

16. Dispositif selon la revendication 15, **caractérisé en ce que** le ressort en spirale est constitué d'un acier à ressort ou d'une spirale en matière plastique.

17. Utilisation du dispositif selon l'une quelconque des revendications précédentes pour le guidage de câbles de signaux et / ou de câbles d'alimentation électrique et / ou de câbles pneumatiques et / ou de câbles à fibre optique et / ou de câbles Bowden.

18. Véhicule à deux roues, muni d'un dispositif selon l'une quelconque des revendications 1 à 17.

19. Véhicule à trois roues, muni d'un dispositif selon l'une quelconque des revendications 1 à 17.

20. Véhicule à quatre roues, muni d'un dispositif selon l'une quelconque des revendications 1 à 17.
